# EUROPEAN PATENT SPECIFICATION

(11) **EP 4 240 114 B1**
(45) Date of publication and mention of the grant of the patent: **01.01.2025**
(21) Application number: 22159613.3
(22) Date of filing: 02.03.2022
(51) Int. Cl.: H05B 45/3725, H02J 9/06, H02J 13/00, H05B 47/175, H05B 45/30

(54) **DRIVER FOR LIGHTING MEANS, EMERGENCY LIGHTING SYSTEM AND METHODS FOR OPERATING DRIVER**
TREIBER FÜR BELEUCHTUNGSMITTEL, NOTBELEUCHTUNGSSYSTEM UND VERFAHREN ZUM BETRIEB DES TREIBERS
CIRCUIT DE COMMANDE POUR MOYEN D'ÉCLAIRAGE, SYSTÈME D'ÉCLAIRAGE DE SECOURS ET PROCÉDÉS DE FONCTIONNEMENT DE CIRCUIT DE COMMANDE

(43) Date of publication of application: 06.09.2023
(73) Proprietor: Zumtobel Lighting GmbH, 6850 Dornbirn (AT)
(72) Inventor: Block, Steffen, 6850 Dornbirn (AT)
(74) Representative: Beder, Jens

(56) References cited:
- EP-A1- 3 515 155
- GB-A- 2 534 901
- US-A1- 2015 214 785
- US-A1- 2016 330 825
- US-A1- 2017 310 157
- US-A1- 2019 215 920

## Description

The invention relates to drivers for lighting means, emergency lighting systems and methods for operating or using a driver for lighting means.

Document EP 3 515 155 A1 discloses a switch device having an auxiliary power unit and a wireless receiving function, and a lamp system thereof. Document US 2015/214785 A1 discloses an emergency lighting device. Document US 2019/215920 A1 discloses a control of an isolated auxiliary power supply and a DALI supply for sensor-ready LED drivers. Document GB 2 534 901 A discloses a wireless control and sensing apparatus and method for an emergency luminaire. Document US 2016/330825 A1 discloses a cloud connected motion sensor lighting grid. Document US 2017/310157 A1 discloses a lamp with battery backup capability.

The present invention is in the field of lighting, in particular in the field of emergency lighting. For providing emergency lighting a driver for lighting means and an emergency driver for the lighting means may be provided that may form an emergency lighting system. The lighting means may be one or more light emitting diodes (LEDs). The driver may provide an electrical supply (may be referred to as electrical energy supply) for the lighting means in case of a normal operation state (normal state). For this, the driver may be electrically connected to a central electrical energy source that normally provides electrical energy in the area (e.g. building) in which the emergency lighting system is used for providing lighting. The terms "electrically connect" and "connect" may be used as synonyms. The central electrical energy source may be for example mains. In the normal operation state, the electrical supply from the central electrical energy source (e.g. mains) functions or works normally. That is, electrical energy is provided from the central electrical energy source (e.g. mains). During an emergency operation state (emergency state), the electrical supply from the central electrical energy source is disturbed or may be completely stopped. For example, an emergency operation state may be present in case of mains failure (e.g. due to a power plant break down), a fire in a building (in which the emergency lighting system is used) that destroys the electrical energy supply from the central electrical energy source, etc.

In the normal operation state, the driver is configured to provide, using electrical energy provided from the central electrical energy source (e.g. mains), the electrical supply for the lighting means. In the emergency operation state, the emergency driver is configured to provide, using electrical energy provided from a battery, the electrical supply for the lighting means. The operation or driving of the lighting means by the emergency driver in the emergency state may be different to the operation or driving of the lighting means by the driver in the normal state. For example, the emergency driver may drive the lighting means such that they emit less light (i.e. light of a smaller light intensity) in the emergency state compared to the normal state. This allows reducing electrical energy consumption and, thus, prolonging the time during which the battery may provide electrical energy for the electrical supply of the lighting means in the emergency state. The emergency driver may be electrically connected to the battery or may comprise the battery. The battery may be a rechargeable battery. The emergency driver may be configured to charge the battery (rechargeable battery) with electrical energy from the central electrical energy source. This may be done during the normal operation state and optional during the emergency operation state as long as enough electrical energy for battery charging is supplied by the central electrical energy source in the emergency operation state.

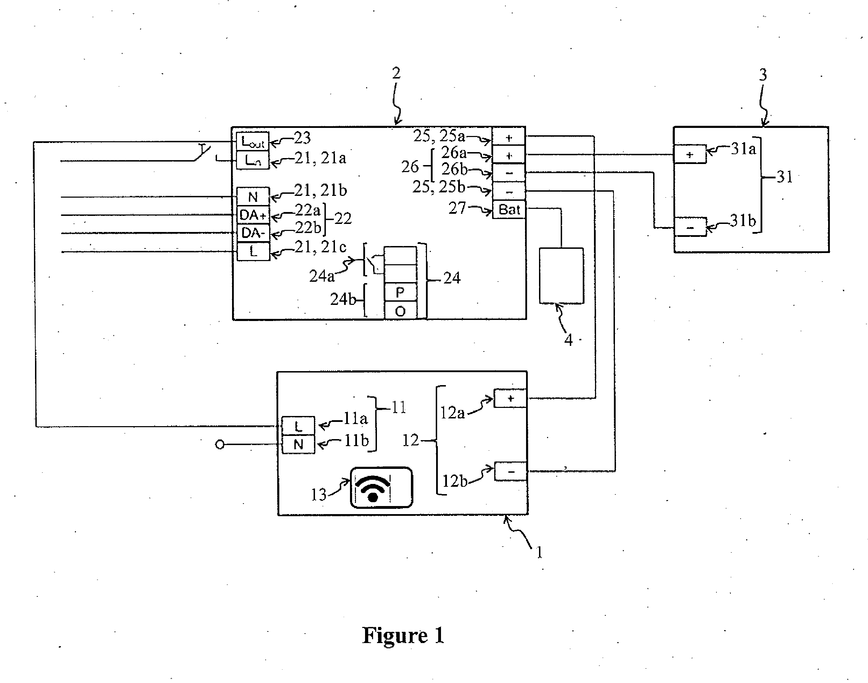

**Figure 1** shows a block diagram of an example of an emergency lighting system, as described above. As shown in Figure 1, the emergency lighting system may comprise a driver 1 for lighting means 3 (for the normal operation state) and an emergency driver 2 for the lighting means 3 (for the emergency operation mode). Further, the system may comprise the lighting means 3. The lighting means 3 may be one or more LEDs, for example in the form of a LED module. That is, the lighting means 3 may be a LED module comprising one or more LEDs. In Figure 1, an input 31 of the lighting means 3 for receiving electrical energy as electrical supply is shown, which comprises e.g. two input terminals 31a and 31b. The number of input terminals may be different.

The emergency driver 2 comprises a battery input 27 ("Bat") for being electrically connected to a battery 4. This may be different. For example, the emergency driver 2 may comprise the battery 4. The emergency driver 2 may comprise an input 21 for being electrically connected to the central electrical energy source (e.g. mains). For example, the input 2 may comprise three input terminals 21a, 21b and 21c. The number of input terminals may be different. A first input terminal 21a may be connected via a switch (e.g. a light switch) to the central electrical energy source (e.g. mains). A second input terminal 21b may be connected via a neutral line (N-line) to the central electrical energy source and a third input terminal 21c may be connected via a live line (L-line to the central electrical energy source). The emergency driver 2 may comprise a bus interface 22 for being electrically connected to a wired bus, e.g. a DALI-bus or DALI-2-bus. The bus interface may comprise e.g. two terminals 22a and 22b (DA+, DA-). The number of terminals of the bus interface 22 may be different. The emergency driver 2 may comprise an electrical supply output 23 (may be abbreviated by "supply output") for providing electrical energy dependent on a test mode of the emergency driver 2. Namely, the emergency driver 2 may be configured to provide electrical energy at the supply output 23 when the test mode of the emergency driver 2 is deactivated and to not provide electrical energy at the supply output 23 when the test mode is activated. For example, the supply output 23 may be electrically connected to the input 21, e.g. the input terminal 21c. When the test mode is deactivated, the supply output 23 may receive electrical energy via the input 21 (e.g. input terminal 21c) from the central electrical energy source. When the test mode is activated, the supply output 23 may not receive electrical energy via the input 21 (e.g. input terminal 21c) from the central electrical energy source. That is, when the test mode is activated, the electrical connection between the supply output 23 and the input 21c may be interrupted e.g. by a non-conducting switch. The switch is conducting when the test mode is deactivated. Not providing electrical energy at the electrical supply output 23 may be understood as providing no electrical energy at the supply output 23 or providing electrical energy below a threshold value for the electrical energy.

The test mode allows testing the emergency driver 2 in order to comply with safety regulations that are in place due to national or international law. In the test mode a duration test and/or a function test of the emergency driver 2 may be performed. The test mode may be activated and deactivated by a user or operator via a user interface 24 of the emergency driver. For example, the user interface 24 may comprise an actuator 24a (e.g. a push button) that may activate and deactivate the test mode when being actuated (e.g. pushed or pressed) by a user. Optionally, the user interface may comprise status lighting means 24b (e.g. a status LED) for indicating whether the test mode is activated (active) or deactivated (inactive). This user interface 24 is only by way of example and, thus, may be different
The emergency driver 2 may comprise a second input 25 for receiving electrical energy. For example, the second input 25 may comprise two input terminals 25a and 25b. The number of input terminals may be different. The driver 1, e.g. an output 12 of the driver 1, may be electrically connected to the second input 25 of the emergency driver 2. The emergency driver 2 may comprise a second output 26 (may be referred to by only output or by second electrical supply output) for providing an electrical supply for the lighting means 3 (e.g. electrical energy, current, voltage). The second output 26 may comprise e.g. two output terminals 26a and 26b. The number of output terminals may be different. The input 31 of the lighting means 3 may be electrically connected to the second output 26 of the emergency driver 2.

As shown in Figure 1, the driver 1 comprises an input 11 for receiving electrical energy e.g. from the central electrical energy source (e.g. mains). The input may comprise e.g. two input terminals 11a and 11b. The number of input terminals may be different. For an electrical supply of the driver 1, the input 11 of the driver 1 may be electrically connected to the electrical supply output 23 of the emergency driver 2. The driver 1 comprises an output 12 for providing an electrical supply for the lighting means 3. The output 12 comprises e.g. two output terminals 12a and 12b. The number of output terminals may be different. The output 12 of the driver 1 may be electrically connected to the second input 25 of the emergency driver 2 for providing via the emergency driver 2 the electrical supply for the lighting means 3 (e.g. electrical energy, current, voltage) to the lighting means 3.

Instead of providing e.g. electrical energy, current or voltage (as electrical supply) via the emergency driver 2 to the lighting means 3, the driver 1 may be configured to directly provide the electrical energy, current respectively voltage to the lighting means 3. For this, the input 31 of the lighting means 3 may be electrical connected to the output 12 of the driver (not shown in Figure 1). In this case, the input 31 of the lighting means 3 may be connected to the output 12 of the driver 1 (for being electrically supplied by the driver 1 in the normal operation state) and the second output 26 of the emergency driver 2 (for being electrically supplied by the emergency driver 2 in the emergency operation state). In this case, the emergency driver 2 may not comprise the second input 25.

The emergency driver 2 and/or the driver 1 may monitor the electrical supply from the central electrical energy source (e.g. mains). In case said electrical supply stops or falls below a threshold for the electrical supply (e.g. the electrical energy supplied from the central electrical energy source falls below a threshold for the electrical energy), the respective driver monitoring the electrical supply from the central electrical energy source may detect or determine that the emergency operation state is present. In case only one entity of the driver 1 and the emergency driver 2 monitors the electrical supply from the central electrical energy source, the monitoring entity may inform the other entity about the presence of the emergency operation state.

In case the normal operation mode is present, the driver 1 may provide the electrical supply for the lighting means 3. For this, the driver 1 may use the electrical energy provided via the emergency driver 2 from the central electrical energy source (e.g. mains). The emergency driver 2 may optionally charge the battery 4 in the normal operation state. For this, the emergency driver 2 may use the electrical energy provided from the central electrical energy source (e.g. mains). In case the emergency operation state is present, the emergency driver 2 may provide the electrical supply for the lighting means 3 using electrical energy from the battery 4. Optionally, the emergency driver 2 may charge the battery 4 in the emergency operation state in case electrical energy is provided from the central electrical energy source. This electrical energy may be not be sufficient for driving the lighting means by the driver 1 (and, thus, the emergency operation state is present), but sufficient for charging the battery 4.

In the example shown in Figure 1 (i.e. the driver 1 is configured to provide electrical energy via the emergency driver 2 to the lighting means 3), the emergency driver 2 may monitor the electrical supply from the central electrical energy source (e.g. mains) and determine or detect whether the normal operation state or the emergency operation state is present. When the emergency driver 2 determines or detects that the normal operation state is present, the emergency driver may be configured to provide electrical energy, received at the second input 25 from the driver 1, via the second output 26 to the lighting means 3. Further, in the normal operation state the emergency driver 2 may provide the electrical energy, received at the input 21 from the central electrical energy source (e.g. mains) via the electrical supply output 23 to the driver 1. Thus, in the normal operation state, the driver 1 may provide, using the electrical energy received by the input 11 from the electrical supply output 23 of the emergency driver 2, the electrical supply for the lighting means 3 (via its output 12 to the second input 25 of the emergency driver). In other words, in the normal operation state, the driver 1 may provide via the emergency driver 2 the electrical supply for the lighting means 3 (e.g. electrical energy, current, voltage) to the lighting means 3. The emergency driver 2 may be configured to transfer electrical energy received (via its input 21) from the central electrical energy source to the electrical supply output 23 and, thus, to the driver 1 (when the input 11 of the driver 1 is connected to the electrical supply output 23 of the emergency driver 23).

When the emergency driver 2 determines or detects that the emergency operation state is present, the emergency driver 2 may be configured to provide electrical energy from the battery via the second output 26 to the lighting means 3 for an emergency lighting. Further, in the emergency operation state the emergency driver 2 may stop providing electrical energy at the electrical supply output 23.

For example, the emergency driver 2 may comprise switching means (not shown in Figure 1) that are configured to electrically connect the second input 25 to the second output 26 in the normal operation state and disconnect the second input 25 and the second output 26 from each other. The switching means may be configured to allow an electrical supply by the emergency driver 2, e.g. using electrical energy from the battery 4, via the second output 26 to the lighting means 3 in the emergency operation state and prevent such an electrical supply in the normal operation state.

For performing a test (e.g. duration test and/or function test) of the emergency driver 2 during a normal operation state the presence of the emergency operation state is to be simulated. For this, the emergency driver 2 may be configured to not provide electrical energy at the electrical supply output 23 when the test mode of the emergency driver is activated. Further, when the test mode is activated, the emergency driver 2 is configured to provide electrical energy, e.g. using electrical energy from the battery 4, at the second output 26.

Thus, when the test mode is activated, the electrical energy supply to the driver 1 (the input 11 of the driver 1) is switched off or stopped. The emergency driver 2 may be switched to an operation in which it provides electrical energy at its second output 26 using electrical energy from the battery. This may be referred to as battery operation of the emergency driver 2.

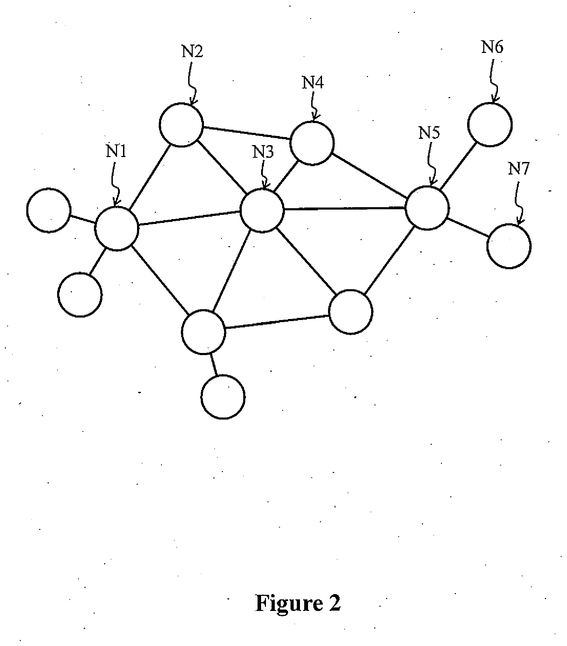

As shown in Figure 1, the driver 1 may comprise wireless communication means 13 for a wireless communication with one or more other entities (outside the driver 1). Such wireless communication means 13 may be configured such that the driver 1 may be part of a wireless communication network in the form of a mesh network. As a result thereof, the activation of the test mode of the emergency driver 2 for testing the emergency driver 2 may cause problems for the driver 1 with regard to its function as a node in the mesh network. Namely, due to stopping the electrical energy supply from the electrical supply output 23 of the emergency driver 2 when the test mode is activated, there is no electrical energy supply for the driver 1 and, thus, the wireless communication means 13 of the driver 1. That is, when the test mode of the emergency driver 2 is activated, the driver 1 and, thus, the wireless communication means 13 do not receive electrical energy. Therefore, when the test mode of the emergency driver 2 is activated, the wireless communication means 13 become power-off or current less and, thus, stop performing their function. An example of the function of the wireless communication means 13 (e.g. when the driver 1 is part of a mesh network) may comprise or be receiving wireless signals from other entities (e.g. other node(s) of the mesh network) and relaying or retransmitting these wireless signals to other entities (e.g. further node(s) of the mesh network). Thus activation of the test mode may result in a failure or disturbance of wireless communication in the mesh network, of which the driver 1 may be part of, as exemplarily described below with regard to Figure 2.

**Figure 2** shows an example of a wireless communication network. The wireless communication network is a mesh network comprising several nodes (network devices), such as those indicated with reference signs N1 to N7.

For example, when node N1 wants to wirelessly transmit a message to the node N4 in the mesh network, then the message transmitted by the node N1 may be relayed or (re)transmitted by each of the nodes N2 and N3. Therefore, in case the driver 1 of Figure 1 is the node N2 and the test mode of the emergency driver is activated this does not have an effect on the node N1 transmitting a message to the node N4 and, thus, does not have an effect on the wireless communication in the mesh network. The wireless communication means 13 of the driver 1 stop working when the test mode of the emergency driver is activated, because the electrical supply of the driver 1 from the electrical supply output 23 of the emergency driver 2 is interrupted or stopped when the test mode is activated. This is not a problem for the wireless communication in the mesh network, because the node N3 still may relay or (re)transmit the messages from the node N1 to the node N4.

However, in case the driver 1 of Figure 1 is the node N5 and for example the node N4 wants to transmit messages to the node N6 or node N7, the messages from the node N4 may be transmitted only by the driver 1 to the nodes N6 and N7. As a result, in such a situation, the test mode of the emergency driver 2 has an effect on the driver 1 as a node of the mesh network and, thus, the wireless communication in the mesh network. Namely, as outlined above, during the time the test mode is activated, the driver 1 is not electrically supplied with electrical energy and, thus, the wireless communication means 13 of the driver 1 (allowing the driver 1 to be part of the wireless communication mesh network) do not work or stop working. Therefore, when the test mode is activated, the driver 1 being the node N5 may not relay or transmit a message from the node N4 to the nodes N6 and N7.

In the light of the above, it is an object of the invention to provide a driver for lighting means without the above described drawback. It may be an object of the invention to provide a driver for lighting means, which may be used in an emergency lighting system (e.g. the system of Figure 1) and at the same time may be part of a wireless network (e.g. mesh network) without having a negative impact on the wireless communication of the wireless network (e.g. during an emergency driver's test mode).

These and other objects, which become apparent upon reading the following description, are solved by the subject-matter of the independent claims. The dependent claims refer to preferred embodiments of the invention.

According to a first aspect of the invention, a driver for lighting means is provided. Optionally, the lighting means are at least one light emitting diode (LED). The driver comprises an input for receiving electrical energy, a second input for receiving electrical energy, wireless communication means for wireless communication with outside the driver, and activation and deactivation means for activating and deactivating an electrical supply function of the driver. The driver is configured to provide, using electrical energy received by the input, an electrical supply for the lighting means when the electrical supply function is activated, and not provide the electrical supply for the lighting means when the electrical supply function is deactivated. The wireless communication means are configured to be electrically supplied from the input of the driver. The activation and deactivation means are configured to activate the electrical supply function of the driver when the second input receives electrical energy, and deactivate the electrical supply function of the driver when the second input does not receive electrical energy.

In other words, the first aspect proposes a driver with two inputs. One input (i.e. the input of the driver) may be electrically connected to an external electrical energy source (e.g. mains) that provides electrical energy independent of whether a test mode of an emergency driver (e.g. the emergency driver 2 of Figure 1) is activated or not. The other input (i.e. the second input of the driver) may be connected to an output of the emergency driver that does not provide electrical energy when the test mode of the emergency driver is activated (e.g. the electrical supply output 23 of the emergency driver 2 of Figure 1). Thus, the driver of the first aspect allows to stop providing the electrical supply for the lighting means, when the test mode of the emergency driver is activated, and, thus, allow performance of the test mode of the emergency driver (for which the electrical supply of the lighting means from the driver is to be stopped). At the same time, the function of the driver 1 as a node of a wireless communication mesh network is not disturbed by the activated test mode of the emergency driver. Namely, the wireless communication means of the driver are configured to be electrically supplied from the input of the driver. Thus, this electrical energy supply is not effected by the test mode being activated. Therefore, the driver according to the first aspect is configured to be part of an emergency lighting system having an emergency driver (e.g. the system of Figure 1) and at the same time be part of a wireless communication mesh network. Namely, the driver allows the test mode of the emergency driver to take part and the driver may function as a node of the wireless communication network (e.g. wirelessly transmitting or retransmitting messages) when the test mode of the emergency driver is deactivated and activated.

As outlined above, the driver is configured such that: if the electrical supply function is activated, the driver is configured to provide, using electrical energy received by the input, the electrical supply for the lighting means; and if the electrical supply function is deactivated, the driver does not provide the electrical supply for the lighting means. Further, as outlined above, the driver is configured such that: if the second input receives electrical energy, the activation and deactivation means activate the electrical supply function of the driver; and if the second input does not receive electrical energy, the activation and deactivation means deactivate the electrical supply function of the driver. The terms "in case that", "in the event of", "if" and "when" may be used as synonyms.

The input of the driver may be referred to as "first input". The input of the driver may be configured to be electrically connected to an external electrical energy source. For example, the external electrical energy source may be mains or an electrical supply output of an emergency driver (e.g. an optional further electrical supply output of the emergency driver 2 of Figure 1), wherein the emergency driver is configured to provide electrical energy at the electrical supply output independent on whether a test mode of the emergency driver is activated or not.

The second input of the driver may be configured to be electrically connected to an electrical supply output of the emergency driver (e.g. the electrical supply output 23 of the emergency driver 2 of Figure 1), wherein the emergency driver is configured to not provide electrical energy at the electrical supply output when a test mode of the emergency driver is activated.

The wireless communication means may be configured to transmit and/or receive wireless signals. Optionally, the wireless signals are radio signals. In addition or alternatively, the wireless signals may be or comprise ultrasound signals, infrared signals and/or visible light signals. The wireless communication means may be configured to communicate according to the Bluetooth standard, the near-field communication (NFC) standard, Wireless Local Area Network (WLAN) standard or any other known wireless communication type or standard.

The activation and deactivation means may be electrically connected to or may at least partly be part of control means of the driver for controlling functions of the driver. The activation and deactivation means may be implemented by software and/or hardware. The activation and deactivation means may be configured to monitor whether electrical energy is supplied or present at the second input of the driver.

The lighting means may be a LED module comprising one or more LEDs.

The second input not receiving electrical energy may be understood as the second input receiving no electrical energy or the second input receiving electrical energy that is below a threshold value for the electrical energy.

Optionally, the activation and deactivation means comprise or are switching means. The driver comprises electrical supply means configured to provide via the switching means the electrical supply for the lighting means. The switching means may be configured to be in a conducting state when the second input receives electrical energy, and in a non-conducting state when the second input does not receive electrical energy.

The switching means may comprise one or more switches. The one or more switches may be one or more transistors. For example, the one or more switches may be at least one of field effect transistors (FETs), such as metal-oxide semiconductor FETs (MOSFETs), bipolar junction transistors (BJTs) and insulated-gate bipolar transistors (IGBTs). In addition or alternatively, any other switch type (e.g. transistor type) may be used.

The electrical supply means may comprise one or more converters. The one or more converters may be at least one of DC-to-DC converters, AC-to-DC converters, DC-to-AC converters and AC-to-AC converters. At least one of the one or more converters may be an actively switched converter comprising at least one switch, wherein the actively switched converter may be controlled by controlling switching of the at least one switch. The at least one switch may be at least one transistor. Examples of an actively switched converter comprise boost converter, buck converter, flyback converter, resonant converter etc. The aforementioned examples may be or may be part of an actively switched AC-to-DC converter. The aforementioned examples may be or may be part of an actively switched DC-to-DC converter. The electrical supply means may comprise filter means, rectifier means and/or power factor correction (PFC) means. The filter means many be or may comprise an electromagnetic interference (EMI) filter. The rectifier means may be or may comprise a half-wave rectifier e.g. comprising two diodes, a full-wave rectifier e.g. comprising four diodes etc. The PFC means may be passive or active. For example, at least one of the optional one or more converters of the supply means, e.g. an AC-to-DC-converter, may be configured to provide the PFC function. For example, an actively switched AC-to-DC-converter may be configured to provide the PFC function.

The electrical supply means may be part of an electrical supply circuit that is configured to receive electrical energy from the input of the driver. The electrical supply circuit may be electrically connected to the input of the driver. The electrical supply circuit may comprise one or more converters. The one or more converters may be at least one of DC-to-DC converters, AC-to-DC converters, DC-to-AC converters and AC-to-AC converters. The one or more converters of the electrical supply circuit may be as outlined above with regard to the electrical supply means. The electrical supply circuit may comprise filter means, rectifier means and/or power factor correction (PFC) means. The filter means, rectifier means and/or power factor correction (PFC) means of the electrical supply circuit may be as outlined above with regard to the electrical supply means.

The electrical supply means may be configured to provide the electrical supply for the lighting means by providing electrical energy for the lighting means to an output of the driver. The output of the driver may be configured to be electrically connected to the lighting means (electrical supply input of the lighting means). The output of the driver may be configured to be electrically connected to an input of an emergency driver (e.g. the second input 25 of the emergency driver 2 of Figure 1). The emergency driver may be configured to provide, in the normal operation state, electrical energy received at the aforementioned input at an output of the emergency driver to which the lighting means may be connected.

As outlined above, the switching means may be configured such that: if the second input receives electrical energy, the switching means are in a conducting state; and if the second input does not receive electrical energy, the switching means are in a non-conducting state.

Optionally, the switching means are galvanically isolated from the second input of the driver.

With other words, the electrical components of the driver may be galvanically isolated from the second input of the driver. The driver may comprise one or more transformers and/or one or more optocouplers for galvanically isolating the switching means from the driver.

Optionally, the driver comprises electrical supply means configured to provide the electrical supply for the lighting means, and control means configured to control the electrical supply means. The control means may comprise or may be electrically connected to the activation and deactivation means. The control means may be configured to control the electrical supply means to not provide the electrical supply for the lighting means when the electrical supply function is deactivated.

The control means may be configured to allow or control the electrical supply means to provide the electrical supply for the lighting means when the electrical supply function is activated. For example, the control means may be configured to control the electrical supply means to provide the electrical supply for the lighting means in a normal operation state when the electrical supply function is activated

In other words, the control means may be configured to control the electrical supply means to not provide the electrical supply for the lighting means when the second input does not receive electrical energy. The control means may be configured to allow or control the electrical supply means to provide the electrical supply for the lighting means when the second input receives electrical energy.

The electrical supply means may be implemented as outlined above with regard to the electrical supply means of the driver. The control means may comprise or may be at least one of a controller, microcontroller, processor, microprocessor, application-specific integrated circuit (ASIC) and field-programmable gate array (FPGA). In addition or alternatively, any other control means type may be used. The control means may be implemented by hardware and/or software.

As outlined above, the control means may be configured such that: if the electrical supply function is deactivated, the control means control the electrical supply means to not provide the electrical supply for the lighting means. The control means may be configures such that: if the electrical supply function is activated, the control means allow or control the electrical supply means to provide the electrical supply for the lighting means.

The description with regard to Figures 1 and 2 may be correspondingly valid for the driver according to the first aspect.

According to a second aspect of the invention, a driver for lighting means is provided. Optionally, the lighting means are at least one light emitting diode (LED). The driver comprises an input for receiving electrical energy, a bus interface for being electrically connected to a wired bus, and wireless communication means for wireless communication with outside the driver. The driver is configured to provide, using electrical energy received by the input, an electrical supply for the lighting means. The wireless communication means are configured to be electrically supplied from the bus interface.

With other words, the second aspect proposes a driver with an input and a bus interface. The bus interface may provide electrical energy, provided by a bus connectable to the bus interface, independent of whether a test mode of an emergency driver (e.g. the emergency driver 2 of Figure 1) is activated or not. The input of the driver may be connected to an output of the emergency driver that does not provide electrical energy when the test mode of the emergency driver is activated (e.g. the electrical supply output 23 of the emergency driver 2 of Figure 1). Thus, the driver of the first aspect allows to stop providing the electrical supply for the lighting means, when the test mode of the emergency driver is activated, and, thus, allows performance of the test mode of the emergency driver (for which the electrical supply of the lighting means from the driver is to be stopped). At the same time, the function of the driver 1 as a node of a wireless communication mesh network is not disturbed by the activated test mode of the emergency driver. Namely, the wireless communication means of the driver are configured to be electrically supplied from the bus interface of the driver. Thus, this electrical energy supply is not effected by the test mode. Therefore, the driver according to the second aspect is configured to be part of an emergency lighting system having an emergency driver (e.g. the system of Figure 1) and at the same time be part of a wireless communication mesh network. Namely, the driver allows the test mode of the emergency driver to take part and the driver may function as a node of the wireless communication network (e.g. wirelessly transmitting or retransmitting messages) when the test mode of the emergency driver is deactivated and activated.

The description of the wireless communication means of the driver according to the first aspect is valid for the wireless communication means of the driver according to the second aspect.

The lighting means may be a LED module comprising one or more LEDs.

Optionally, the bus interface is a DALI and/or DALI-2 bus interface.

In other words, the bus interface may be configured to be connected to a DALI bus and/or DALI-2 bus. That is, the bus interface may be configured according to the DALI standard and/or the DALI-2 standard. For example, the bus interface may be configured to communicate according to the DALI standard and/or the DALI-2 standard via a wired bus when the bus is connected to the bus interface.

DALI is the abbreviation of "Digital Addressable Lighting Interface". DALI-2 is the follow-up standard of DALI. DALI (also known as DALI Edition 1) and DALI-2 (also known as DALI Edition 2) are well known standards in the field of lighting. Alternatively or additionally, the bus interface may be configured for a different bus type, bus communication type or standard. For example, the bus interface may be configured according to the "D4i"-standard. The D4i-standard is a well known DALI standard for intelligent, IoT-ready luminaires. The bus interface may be configured to be connected to a wired bus that provides electrical energy (sufficient for electrically supplying the wireless communication means of the driver). For example, the bus interface may be configured to be connected to a wired bus that provides electrical energy (sufficient for electrically supplying the wireless communication means of the driver) in the off state of the bus (i.e. when there is no communication via the bus). That is, the bus interface may be configured to be connected to a wired data bus that has a high level or provides electrical energy (sufficient for electrically supplying the wireless communication means of the driver) in the off state of the bus (i.e. when no data transmission takes place over the bus). An electrical bus supply of the bus may be outside the driver, for example in an emergency driver (e.g. the emergency driver 2 of Figure 1).

Optionally, the wireless communication means are configured to obtain data from the bus interface and wirelessly transmit the obtained data. In addition or alternatively, the wireless communication means may be configured to wirelessly receive data and provide the wirelessly received data to the bus interface.

Optionally, the bus interface is configured to galvanically isolate the driver from the bus when the bus is electrically connected to the bus interface. In other words, the bus interface is configured to galvanically isolate the rest of the driver (i.e. the electrical components of the driver) from the bus. The driver may comprise one or more transformers and/or one or more optocouplers for galvanically isolating the driver from the bus when the bus is electrically connected to the bus interface.

The description with regard to Figures 1 and 2 may be correspondingly valid for the driver according to the second aspect.

The description with regard to the driver according to the first aspect of the invention may be correspondingly valid for the driver according to the second aspect of the invention. The description with regard to the driver according to the second aspect of the invention may be correspondingly valid for the driver according to the first aspect.

The driver according to the second aspect of the invention achieves the same advantages as the driver according to the first aspect of the invention.

According to a third aspect of the invention, an emergency lighting system is provided. The emergency lighting system comprises an emergency driver for lighting means and a driver according to the first aspect, as decried above. Optionally, the lighting means are at least one light emitting diode (LED). The emergency driver comprises an electrical supply output for providing electrical energy. The second input of the driver is configured to be electrically connected to the electrical supply output of the emergency driver. The emergency driver is configured to not provide electrical energy at the electrical supply output when a test mode of the emergency driver is activated.

The emergency driver may be or may be implemented according to the emergency driver of Figure 1. The description of the emergency lighting system of Figure 1 is correspondingly valid for the emergency lighting system according to the third aspect.

Optionally, the emergency driver comprises a second electrical supply output for providing electrical energy independent of whether the test mode is activated or not. The input of the driver may be configured to be electrically connected to the second electrical supply output of the emergency driver.

The emergency lighting system may be a luminaire.

The system according to the third aspect of the invention achieves the same advantages as the driver according to the first aspect of the invention.

In order to achieve the system according to the third aspect of the invention, some or all of the above-described optional features of the system according to the third aspect may be combined with each other.

According to a fourth aspect of the invention, an emergency lighting system is provided. The emergency lighting system comprises an emergency driver for lighting means and a driver according to the second aspect, as described above. Optionally, the lighting means are at least one light emitting diode (LED). The emergency driver comprises an electrical supply output for providing electrical energy. The input of the driver is configured to be electrically connected to the electrical supply output of the emergency driver. The emergency driver is configured to not provide electrical energy at the electrical supply output when a test mode of the emergency driver is activated.

The emergency driver may be or may be implemented according to the emergency driver of Figure 1. The description of the emergency lighting system of Figure 1 is correspondingly valid for the emergency lighting system according to the fourth aspect.

The emergency lighting system may be a luminaire.

The description with regard to the system according to the third aspect of the invention may be correspondingly valid for the system according to the fourth aspect of the invention. The description with regard to the system according to the fourth aspect of the invention may be correspondingly valid for the system according to the third aspect.

The system according to the fourth aspect of the invention achieves the same advantages as the driver according to the first aspect of the invention.

According to a fifth aspect of the invention, a method for operating a driver for lighting means is provided. Optionally, the lighting means are at least one light emitting diode (LED). The driver comprises an input for receiving electrical energy, a second input for receiving electrical energy, and wireless communication means for wireless communication with outside the driver. The driver is configured to provide, using electrical energy received by the input, an electrical supply for the lighting means when an electrical supply function of the driver is activated, and not provide the electrical supply for the lighting means when the electrical supply function is deactivated. The method comprises activating the electrical supply function of the driver when the second input receives electrical energy, and deactivating the electrical supply function of the driver when the second input does not receive electrical energy. Further, the method comprises electrically supplying the wireless communication means from the input of the driver.

The driver may be a driver according to the first aspect, as described above. The description of the driver according to the first aspect may be correspondingly valid for the method according to the fifth aspect. The description of the method according to the fifth aspect may be correspondingly valid for the driver according to the first aspect.

The method according to the fifth aspect of the invention achieves the same advantages as the driver according to the first aspect of the invention.

According to a sixth aspect of the invention, a method for operating a driver for lighting means is provided. Optionally, the lighting means are at least one light emitting diode (LED). The driver comprises an input for receiving electrical energy, a bus interface for being electrically connected to a wired bus, and wireless communication means for wireless communication with outside the driver. The driver is configured to provide, using electrical energy received by the input, an electrical supply for the lighting means. The method comprises electrically supplying the wireless communication means from the bus interface of the driver.

The driver may be a driver according to the second aspect, as described above. The description of the driver according to the second aspect may be correspondingly valid for the method according to the sixth aspect. The description of the method according to the sixth aspect may be correspondingly valid for the driver according to the second aspect.

The method according to the sixth aspect of the invention achieves the same advantages as the driver according to the first aspect of the invention.

According to a seventh aspect of the invention, a method for operating a driver according to the first aspect, as described above, is provided. The method comprises electrically connecting the second input of the driver to an electrical supply output of an emergency driver for lighting means. Optionally, the lighting means are at least one light emitting diode (LED). The emergency driver is configured to not provide electrical energy at the electrical supply output when a test mode of the emergency driver is activated.

In other words, a method for using a driver according to the first aspect is proposed, wherein the method comprises electrically connecting the second input of the driver to an electrical supply output of an emergency driver for lighting means. The emergency driver is configured to not provide electrical energy at the electrical supply output when a test mode of the emergency driver is activated. That is the method according to the seventh aspect may be referred to as method for using the driver according to the first aspect.

The emergency driver may be or may be implemented according to the emergency driver of the system according to the third aspect or the fourth aspect. The description of the system according to the third aspect may be correspondingly valid for the method according to the seventh aspect. The description of the method according to the seventh aspect may be correspondingly valid for the system according to the third aspect.

The method according to the seventh aspect of the invention achieves the same advantages as the driver according to the first aspect of the invention.

According to an eight aspect of the invention, a method for operating a driver according to the second aspect, as described above, is provided. The method comprises electrically connecting the input of the driver to an electrical supply output of an emergency driver for lighting means. Optionally, the lighting means are at least one light emitting diode (LED). The emergency driver is configured to not provide electrical energy at the electrical supply output when a test mode of the emergency driver is activated.

In other words, a method for using a driver according to the second aspect is proposed, wherein the method comprises electrically connecting the input of the driver to an electrical supply output of an emergency driver for lighting means. The emergency driver is configured to not provide electrical energy at the electrical supply output when a test mode of the emergency driver is activated. That is, the method according to the eight aspect may be referred to as method for using the driver according to the second aspect.

The emergency driver may be or may be implemented according to the emergency driver of the system according to the third aspect or the fourth aspect. The description of the system according to the fourth aspect may be correspondingly valid for the method according to the eighth aspect. The description of the method according to the eighth aspect may be correspondingly valid for the system according to the fourth aspect.

The method according to the eighth aspect of the invention achieves the same advantages as the driver according to the first aspect of the invention.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which
- **Figure 1**: shows a block diagram of an example of an emergency lighting system;
- **Figure 2**: shows an example of a wireless communication network; and
- **Figures 3 to 5**: each show a block diagram of an example of a driver according to an embodiment of the invention for lighting means.

In the Figures, corresponding elements have the same reference signs.

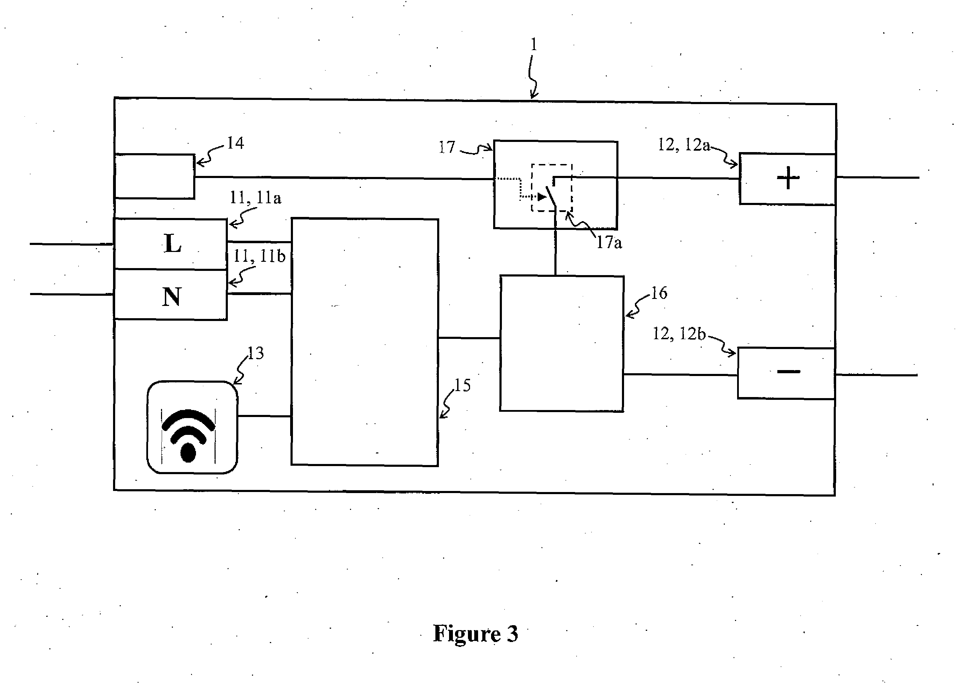

**Figures 3 to 5** each show a block diagram of an example of a driver according to an embodiment of the invention for lighting means.

The driver 1 according to **Figure 3** is an example of the driver according to the first aspect. Thus, the description of the driver according to the first aspect is correspondingly valid for the driver 1. The description of Figures 1 and 2 is correspondingly valid for the driver 1 of Figure 3.

The driver 1 of Figure 3 is a driver for lighting means, such as one or more light emitting diodes (LEDs). The driver 1 comprises an input 11 for receiving electrical energy, a second input 14 for receiving electrical energy, wireless communication means 13 for wireless communication with outside the driver 1, and activation and deactivation means 17 for activating and deactivating an electrical supply function of the driver 1. The driver 1 is configured to provide, using electrical energy received by the input 11, an electrical supply for the lighting means when the electrical supply function is activated, and not provide the electrical supply for the lighting means when the electrical supply function is deactivated. The wireless communication means 13 are configured to be electrically supplied from the input 11 of the driver 1. The activation and deactivation means 17 are configured to activate the electrical supply function of the driver 1 when the second input 14 receives electrical energy, and deactivate the electrical supply function of the driver 1 when the second input 14 does not receive electrical energy.

According to Figure 3, the activation and deactivation means 17 may comprise or may be switching means 17a. The driver 1 may further comprise electrical supply means 16 configured to provide via the switching means 17a the electrical supply for the lighting means. The switching means 17a may be configured to be in a conducting state when the second input 14 receives electrical energy, and in a non-conducting state when the second input 14 does not receive electrical energy. The control of the switching means 17a according to the presence or absence of electrical energy supply at the second input 14 is indicated by the dashed arrow in Figure 1. The activation and deactivation means 17 may be configured to monitor whether electrical energy is supplied or present at the second input 14 of the driver 1.

As shown in Figure 3, the input 11 may comprise e.g. two input terminals 11a and 11b. This number may be different. The driver may comprise an output 12 for providing the electrical supply for the lighting means. The output 12 may comprise e.g. two output terminals 12a and 12b. This number may be different. As shown in Figure 3, the supply means 16 may be configured to provide the electrical supply for the lighting means (e.g. electrical energy for the lighting means) via the switching means 17a to the output 12.

The driver 1 may comprise optional second electrical supply means 15. The second electrical supply means 15 may be connected to the input 11 of the driver 1, the wireless communication means 13 and the electrical supply means 16. The second electrical supply means 15 may be configured to provide, using electrical energy received at the input 11, an electrical supply (e.g. electrical energy) to the wireless communication means 13 and the electrical supply means 16. The wireless communication means 13 and the electrical supply means 16 may be differently supplied with electrical energy received at the input 11 of the driver 1. For example, the electrical supply means 16 may be connected to the input 11 (not shown in Figure 3).

For example, the electrical supply means 16 may be or may comprise at least one DC-to-DC converter (e.g. actively switched DC-to-DC-converter with at least one switch) and the second electrical supply means 15 may be or may comprise at least one AC-to-DC converter (e.g. actively switched AC-to-DC converter with at least one switch). The DC-to-DC converter and the AC-to-DC converter may be as outlined above with regard to the driver of the first aspect. Optionally, the second electrical supply means 15 may comprise filter means and/or rectification means. The at least one actively switched AC-to-DC converter of the second electrical supply means 15 may be configured to perform a PFC function.

Thus, the optional second electrical supply means 15 (e.g. the at least one AC-to-DC converter) may be configured to receive via the input 11 AC power (AC voltage, AC current) and convert the received AC power to DC power (DC voltage, DC current) suitable for electrically supplying the wireless communication means 13 and the electrical supply means 16. The electrical supply means 16 (e.g. the at least one DC-to-DC converter) may be configured to receive the DC power (DC voltage, DC current) from the second electrical supply means 15 and converter the DC power to a second DC power (DC voltage, DC current) for an intended operation of the lighting means in the normal operation state. For example, the greater the second DC power provided to the lighting means (e.g. temporal average of the second DC power), the greater the light intensity or amount of light emitted by the lighting means and vice versa.

The electrical supply means 16 and the second electrical supply means 15 may form an electrical supply circuit of the driver 1. The driver 1, in particular the electrical supply means 16, may be configured to provide at the output 12 electrical energy (for the electrical supply of the lighting means) when the switching means 17a are in the conducting state. The driver 1, in particular the electrical supply means 16, may be configured to provide at the output 12 no electrical energy when the switching means 17a are in the non-conducting state.

The driver 1 may comprise control means (not shown in Figure 3) for controlling functions of the driver 1. That is, the control means may be configured to control the electrical supply means 16, the optional second electrical supply means 15, the wireless communication means 13 and the activation and deactivation means 17 (e.g. the switching means 17a). The activation and deactivation means 17 may be electrically connected or may at least partly be part of the control means. For example, the control means may be configured to control the electrical supply means 16 and the optional second electrical supply means 15 for controlling, e.g. in the normal operation mode, operation of the lighting means (the electrical supply to the lighting means).

The control means may be configured to control wireless communication via the wireless communication means 13. The wireless communication means 13 may be configured to obtain data from the control means and wirelessly transmit the obtained data. In addition or alternatively, the wireless communication means 13 may be configured to wirelessly receive data and provide the wirelessly received data to the control means. Information wirelessly receivable by the wireless communication means 13 may comprise control information for controlling the electrical supply for the lighting means that is providable by the driver 1, such as dimming information. Such control information may be provided to the control means and used by the control means for controlling the electrical supply means 16 and the optional second electrical supply means 15 in order to control operation of the lighting means according to the control information (e.g. in the normal operation state). The control means may receive via the wireless communication means 13 information on whether the normal operation state or the emergency operation state is present.

The control means may be configured to control the switching means 17a. For example, the control means may be configured to control the switching means 17a such that the switching means are in a conducting state when the second input 14 receives electrical energy, and in a non-conducting state when the second input 14 does not receive electrical energy. For this, the control means may be configured to monitor the second input 14. The control means may comprise or may be at least one of a controller, microcontroller, processor, microprocessor, application specific integrated circuit (ASIC) and field-programmable gate array (FPGA). In addition or alternatively any other control means type may be used. The control means may be implemented by hardware and/or software. The control means may be configured to monitor whether electrical energy is supplied or present at the second input 14 of the driver 1. Optionally, a control terminal of the switching means 17a may be electrically supplied from the second input 14 and/or may be electrically connected to the second input 14 such that the switching means are in a conducting state when the second input 14 receives electrical energy, and in a non-conducting state when the second input 14 does not receive electrical energy. The control terminal of the switching means may optionally be connected to the second input 14 via another entity or electrical circuit of the driver 1.

The switching means 17a, e.g. the control terminal of the switching means 17a, may be electrically isolated from the second input 14. Optionally, the driver 1 may comprise one or more transformers and/or one or more optocouplers for achieving such an isolation.

The input 11 of the driver 1 may be electrically connected to an external electrical energy source.

For example, the external electrical energy source may be mains or an electrical supply output of an emergency driver (e.g. an optional further electrical supply output of the emergency driver 2 of Figure 1), wherein the emergency driver is configured to provide electrical energy at the electrical supply output independent of whether a test mode of the emergency driver is activated or not.

The second input 14 of the driver 1 may be configured to be electrically connected to an electrical supply output of the emergency driver (e.g. the electrical supply output 23 of the emergency driver 2 of Figure 1), wherein the emergency driver is configured to not provide electrical energy at the electrical supply output when a test mode of the emergency driver is activated.

The driver 1 of Figure 3 is advantageous with regard to the driver 1 of Figure 1. Namely, according to Figure 3, the wireless communication means 13 may be electrically supplied with energy received by the input 11 and the second input 14 of the driver 1 is present for being connected to the electrical supply output 23 of the emergency driver 2. Thus, when the electrical supply output 23 of the emergency driver 2 does not supply electrical energy as a result of the test mode being activated, the activation and deactivation means 17 may deactivate the electrical supply function of the driver 1 as a result of the second input 14 of the driver 1 not receiving electrical energy. That is, the driver 1 of Figure 3 allows a test mode of the emergency driver. In addition, the electrical supply of the wireless communication means 13 is independent from the electrical supply from the second output 23 of the emergency driver 2. Namely, the wireless communication means 13 are configured to be electrically supplied from the input 11 of the driver 1 (e.g. via the optional electrical supply means 15). As a result, the wireless communication means 13 may wirelessly communicate irrespective of whether the test mode of the emergency driver is present or not.

The driver 1 may be part of the emergency lighting system of Figure 1 instead of the driver 1 of Figure 1. For this, the input 11 of the driver 1 may be connected to the central electrical energy source(e.g. mains) or to an optional additional electrical supply output of the emergency driver 2 of Figure 1. The emergency driver 2 of Figure 1 is configured to provide electrical energy at the optional additional electrical supply output independent of whether the test mode of the emergency driver 1 is activated or not (deactivated). The second input 14 of the driver 1 of Figure 3 may be connected to the electrical supply output 23 of the emergency driver 2 of Figure 1, wherein the emergency driver 2 is configured to not provide electrical energy at the electrical supply output 23 when the test mode is activated. The output 12 of the driver 1 of Figure 3 may be connected to the second input 25 of the emergency driver 2 of Figure 1.

For further information on the case, in which the driver 1 of Figure 3 is part of the emergency lighting system of Figure 1 (instead of the driver 1 of Figure 1), the description of Figures 1 and 2 is correspondingly valid for the driver 1 of Figure 3.

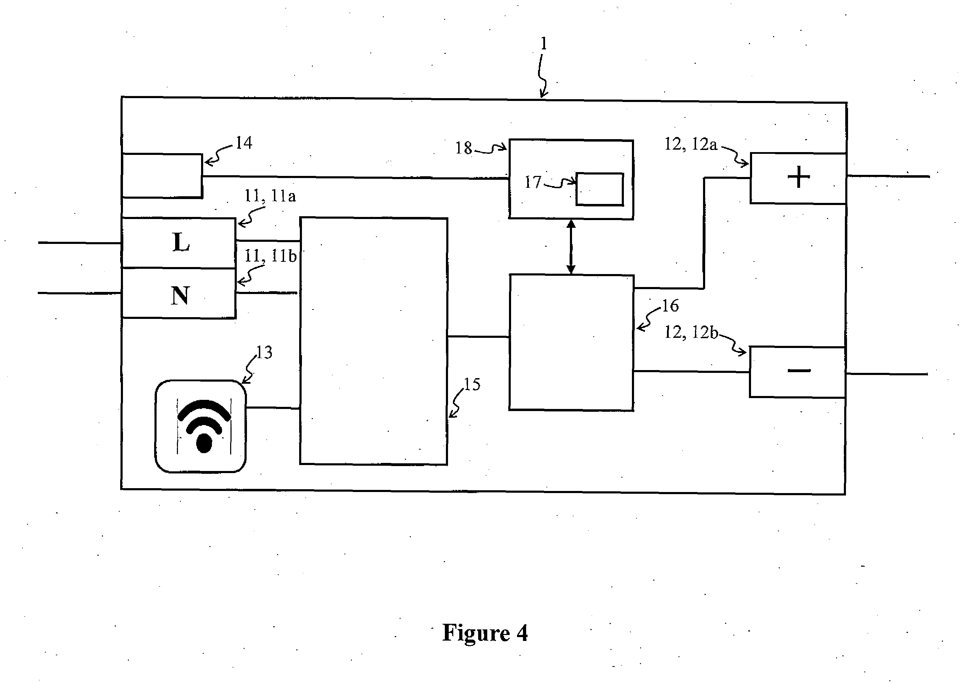

The driver 1 according to **Figure 4** is an example of the driver 1 according to the first aspect. Thus, the description of the driver according to the first aspect is correspondingly valid for the driver 1 of Figure 4. The description of Figures 1 and 2 is correspondingly valid for the driver 1 of Figure 4. The driver 1 of Figure 4 corresponds to the driver 1 of Figure 3 with a difference in that the driver 1 of Figure 4 does not comprise the switching means 17a. Therefore, for describing the driver 1 of Figure 4 reference to the description of Figure 3 is made and in the following mainly the differences of the driver 1 of Figure 4 with regard to the driver of Figure 3 are described.

According to Figure 4, the control means 18 of the driver 1, configured to control the electrical supply means 16, may comprise the activation and deactivation means 17. Alternatively, the control means 18 may be electrically connected to the activation and deactivation means 17. The control means 18 may be configured to control the electrical supply means 16 to not provide the electrical supply for the lighting means when the electrical supply function is deactivated. The control means 18 may be configured to allow or control the electrical supply means 16 to provide the electrical supply for the lighting means when the electrical supply function is activated. The control means 18 (optionally the activation and deactivation means 17) may be configured to monitor whether electrical energy is supplied or present at the second input 14 of the driver 1.

Thus, according to Figure 4, the control means 18 may be configured to allow the electrical supply means 16 to provide the electrical supply for the lighting means when the second input 14 of the driver 1 receives electrical energy and to control the electrical supply means 16 to not provide the electrical supply for the lighting means when the second input 14 does not receive electrical energy. For this, the activation and deactivation means 17 may be configured to monitor the second input 14 of the driver 1. Thus, in case the activation and deactivation means 17 is part of the control means 18, the control means 18 may be configured to monitor the second input 14 of the driver 1. The activation and deactivation means 17 may be implemented by hardware and/or software. In case the control means 18 are electrically connected to the activation and deactivation means 17 (not shown in Figure 4), the activation and deactivation means 17 may be configured to inform the control means 18 on whether the second input 14 receives electrical energy or not. The control means 18 may be configured to determine that the electrical supply function of the driver 1 is activated when the second input 14 receives electrical energy and that the electrical supply function of the driver 1 is deactivated when the second input 14 does not receive electrical energy. Optionally, the activation and deactivation means 17 may be configured to inform the control means 18 on whether the electrical supply function of the driver 1 is activated or deactivated.

The driver of Figure 4 is advantageous with regard to the driver of Figure 1 for the same reasons for which the driver of Figure 3 is advantageous with regard to the driver of Figure 1, as outlined above. The driver of Figure 4 may be part of the emergency lighting system of Figure 1 (instead of the driver of Figure 1) for the reasons outlined above with regard to the driver of Figure 3. The corresponding description may be valid for the driver of Figure 4. For further information on the case, in which the driver 1 of Figure 4 is part of the emergency lighting system of Figure 1 (instead of the driver 1 of Figure 1), the description of Figures 1 and 2 is correspondingly valid for the driver 1 of Figure 4.

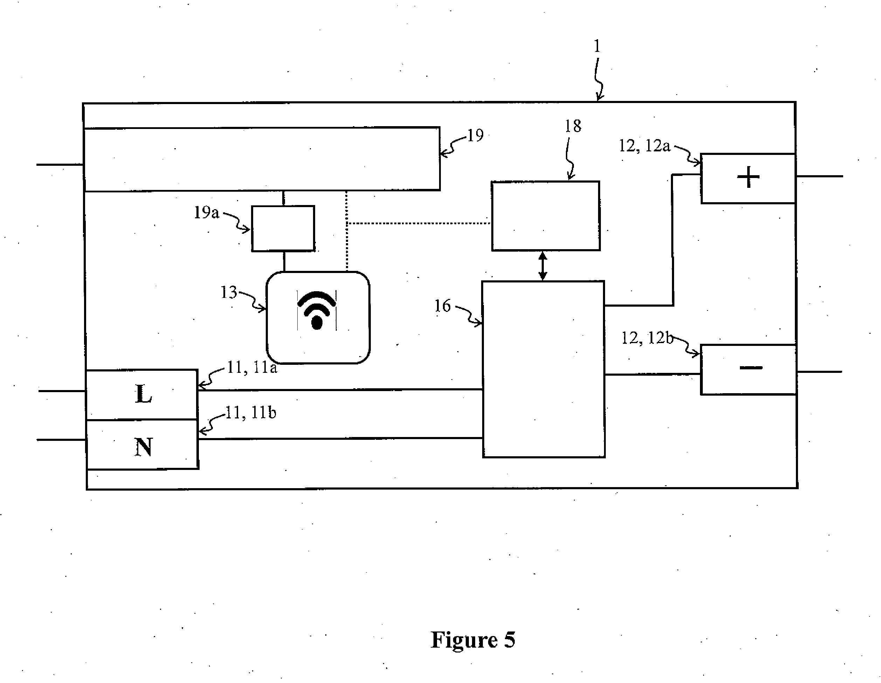

The driver 1 according to **Figure 5** is an example of the driver 1 according to the second aspect. Thus, the description of the driver according to the second aspect is correspondingly valid for the driver 1 of Figure 5. The description of Figures 1 and 2 is correspondingly valid for the driver 1 of Figure 5.

According to Figure 5, the driver 1 comprises an input 11 for receiving electrical energy, a bus interface 19 for being electrically connected to a wired bus, and wireless communication means 13 for wireless communication with outside the driver 1. The driver 1 is configured to provide, using electrical energy received by the input 1, an electrical supply for the lighting means. The wireless communication means 13 are configured to be electrically supplied from the bus interface 19.

As shown in Figure 5, the input 11 may comprise e.g. two input terminals 11a and 11b. This number may be different. The driver 1 may comprise an output 12 for providing the electrical supply for the lighting means. The output 12 may comprise e.g. two output terminals 12a and 12b. This number may be different. As shown in Figure 5, the driver 1 may comprise supply means 16 for providing the electrical supply for the lighting means (e.g. electrical energy for the lighting means) to the output 12.

The electrical supply means 16 may be connected to the input 11 of the driver 1. The electrical supply means 16 may be configured to provide, using electrical energy received at the input 11, the electrical supply for the lighting means.

For example, the electrical supply means 16 may be or may comprise at least one AC-to-DC converter (e.g. actively switched AC-to-DC-converter with at least one switch) and/or at least one DC-to-DC converter (e.g. actively switched DC-to-DC converter with at least one switch).

The DC-to-DC converter and the AC-to-DC converter may be as outlined above with regard to the driver of the first aspect. Optionally, the electrical supply means 16 may comprise filter means and/or rectification means. The at least one AC-to-DC converter may be configured to perform a PFC function.

Thus, the optional electrical supply means 16 (e.g. using at least one AC-to-DC converter) may be configured to receive via the input 11 AC power (AC voltage, AC current) and convert the received AC power to DC power (DC voltage, DC current). The DC power may be DC power for an intended operation of the lighting means in the normal operation state. The DC power may be used for electrical supplying electrical components of the driver 1 (e.g. control means). The electrical supply means 16 (e.g. using at least one DC-to-DC converter) optionally may be configured to convert the DC power (DC voltage, DC current) to a second DC power (DC voltage, DC current) for an intended operation of the lighting means in the normal operation state. For example, the greater the second DC power provided to the lighting means (e.g. temporal average of the second DC power), the greater the light intensity or amount of light emitted by the lighting means and vice versa.

The electrical supply means 16 may form an electrical supply circuit of the driver 1. The driver 1, in particular the electrical supply means 16, may be configured to provide at the output 12 electrical energy (for the electrical supply of the lighting means)

The driver 1 may comprise control means 18 for controlling functions of the driver 1. That is, the control means 18 may be configured to control the electrical supply means 16, and the wireless communication means 13. For example, the control means 18 may be configured to control the electrical supply means 16 for controlling, e.g. in the normal operation mode, operation of the lighting means (the electrical supply to the lighting means). The control means 18 may be configured to control wireless communication via the wireless communication means 13. The control means 18 may comprise or may be at least one of a controller, microcontroller, processor, microprocessor, application specific integrated circuit (ASIC) and field-programmable gate array (FPGA). In addition or alternatively any other control means type may be used. The control means 18 may be implemented by hardware and/or software.

Optionally, the driver 1 may comprise further electrical supply means 19a for providing, using electrical energy received by the bus interface 19, an electrical supply for the wireless communication means 13. The further electrical supply means 19a may comprise at least one DC-to-DC converter (e.g. actively switched DC-to-DC converter). The control means 18 may be configured to control the further electrical supply means 19a. Alternatively, the wireless communication means 13 may be connected to the bus interface 19 for receiving (as electrical supply) electrical energy received by the bus interface 19 (not shown in Figure 5).

The bus interface 19 may be a DALI and/or DALI-2 bus interface. In other words, the bus interface may be configured to be connected to a DALI bus and/or DALI-2 bus. That is, the bus interface 19 may be configured according to the DALI standard and/or the DALI-2 standard. Alternatively or additionally, the bus interface 19 may be configured for a different bus type, bus communication type or standard. For example, the bus interface 19 may be configured according to the "D4i"-standard.

The bus interface 19 may be configured to be connected to a wired bus that provides electrical energy (sufficient for electrically supplying the wireless communication means 13 of the driver 1). For example, the bus interface 19 may be configured to be connected to a wired bus that provides electrical energy (sufficient for electrically supplying the wireless communication means 13 of the driver 1) in the off state of the bus (i.e. when there is no communication via the bus). That is, the bus interface 19 may be configured to be connected to a wired data bus that has a high level or provides electrical energy (sufficient for electrically supplying the wireless communication means 13 of the driver 1) in the off state of the bus (i.e. when no data transmission takes place over the bus). An electrical bus supply of the bus may be outside the driver 1, for example in an emergency driver (e.g. the emergency driver 2 of Figure 1).

The wireless communication means 13 may be configured to obtain data from the bus interface 19 and/or the control means 18 and wirelessly transmit the obtained data (as indicated by the dashed line in Figure 5). In addition or alternatively, the wireless communication means 13 may be configured to wirelessly receive data and provide the wirelessly received data to the bus interface 19 and/or the control means 18 (as indicated by the dashed line in Figure 5). The control means 18 may be configured to obtain data from the bus interface 19 and/or provide data to the bus interface 19 (i.e. receive and/or transmit data via the bus interface 19 and a bus connected to the bus interface 19). Information receivable by the bus interface 19 and/or the wireless communication means 13 may comprise control information for controlling the electrical supply for the lighting means that is providable by the driver 1, such as dimming information. Such control information may be provided to the control means 18 and used by the control means 18 for controlling the electrical supply means 16 in order to control operation of the lighting means according to the control information (e.g. in the normal operation state). The control means 18 may receive via the bus interface 19 and/or the wireless communication means 13 information on whether the normal operation state or the emergency operation state is present.

The control means 18 may be configured to control the wireless communication means 13 for controlling a wireless communication via the wireless communication means 13. The control means 18 may be configured to control the bus interface 19 for controlling a communication via a bus, when the bus is connected to the bus interface 19.

Optionally, the bus interface 19 is configured to galvanically isolate the driver 1 from a bus when the bus is electrically connected to the bus interface 19. In other words, the bus interface 19 is configured to galvanically isolate the rest of the driver 1 (i.e. the electrical components of the driver such as the control means 18, the electrical supply means 16, the optional further electrical supply means 19a and the wireless communication means 13) from the bus. The driver 1 may comprise one or more transformers and/or one or more optocouplers for galvanically isolating the driver 1 from the bus when the bus is electrically connected to the bus interface 19.

The input 11 of the driver 1 of Figure 5 may be configured to be electrically connected to an electrical supply output of the emergency driver (e.g. the electrical supply output 23 of the emergency driver 2 of Figure 1), wherein the emergency driver is configured to not provide electrical energy at the electrical supply output when a test mode of the emergency driver is activated.

The driver 1 of Figure 5 is advantageous with regard to the driver 1 of Figure 1. Namely, according to Figure 5, the wireless communication means 13 may be electrically supplied with energy received by the bus interface 19 and the input 11 of the driver 1 may be connected to the electrical supply output 23 of the emergency driver 2. Thus, when the electrical supply output 23 of the emergency driver 2 does not supply electrical energy as a result of the test mode being activated, the driver 1 does not receive electrical energy for the electrical supply means 16. Thus, the driver 1 (e.g. the electrical supply means 16) do not provide electrical energy at the output 12 for the lighting means in case the test mode of the emergency driver is activated. That is, the driver 1 of Figure 5 allows a test mode of the emergency driver. In addition, the electrical supply of the wireless communication means 13 is independent from the electrical supply from the second output 23 of the emergency driver 2. Namely, the wireless communication means 13 are configured to be electrically supplied from the bus interface 19 of the driver 1 (e.g. via the optional further electrical supply means 19a). As a result, the wireless communication means 13 may wirelessly communicate irrespective of whether the test mode of the emergency driver is activated or not.

The driver 1 of Figure 5 may be part of the emergency lighting system of Figure 1 instead of the driver 1 of Figure 1. For this, the input 11 of the driver 1 of Figure 5 may be connected to the electrical supply output 23 of the emergency driver 2 of Figure 1, wherein the emergency driver 2 is configured to not provide electrical energy at the electrical supply output 23 when the test mode is activated. The output 12 of the driver 1 of Figure 5 may be connected to the second input 25 of the emergency driver 2 of Figure 1.

Optionally, when the driver of Figure 5 is used in the light emitting system of Figure 1 (instead of the driver of Figure 1), activation and deactivation of a test mode of the emergency driver 2 of Figure 1 may be done as follows: A user may transmit wireless signals instructing activation or deactivation of the test mode to the wireless communication means 13 of the driver 1 of Figure 5. The wireless communication means 13 may provide the information regarding activation or deactivation of the test mode of the received wireless signals to the bus interface 19 and/or the controller means 18. Thus, this information may be transmitted via the bus interface 19 of the driver 1 of Figure 5 and a bus to the emergency driver 2 of Figure 1, wherein the bus is connected to the bus interface 19 and the emergency driver 2. In response to receiving via the bus the information regarding activation or deactivation of the test mode, the emergency driver 2 may activate respectively deactivate the test mode. In this case, the emergency driver 2 may not comprise the user interface 24 shown in Figure 1.

For further information on the case, in which the driver 1 of Figure 5 is part of the emergency lighting system of Figure 1 (instead of the driver 1 of Figure 1), the description of Figures 1 and 2 is correspondingly valid for the driver 1 of Figure 5.

In the claims as well as in the description the word "comprising" does not exclude other elements or steps and the indefinite article "a" or "an" does not exclude a plurality. A single element or other unit may fulfill the functions of several entities or items recited in the claims.

## Claims

1. A driver (1) for lighting means (3), optionally at least one light emitting diode, LED, the driver (1) comprising
- an input (11a, 11b) for receiving electrical energy,
- wireless communication means (13) for wireless communication with outside the driver (1), and
- activation and deactivation means (17) for activating and deactivating an electrical supply function of the driver (1); wherein
- the driver (1) is configured to
- provide, using electrical energy received by the input (11a, 11b), an electrical supply for the lighting means (3) when the electrical supply function is activated, and
- not provide the electrical supply for the lighting means when the electrical supply function is deactivated;
- the wireless communication means (13) are configured to be electrically supplied from the input (11a, 11b) of the driver (1);
**characterized in that**:
- the driver (1) further comprises a second input (14) for receiving electrical energy, wherein
- the activation and deactivation means (17) are configured to
- activate the electrical supply function of the driver (1) when the second input (14) receives electrical energy, and
- deactivate the electrical supply function of the driver (1) when the second input (14) does not receive electrical energy.

2. The driver (1) according to claim 1, wherein
- the activation and deactivation means (17) comprise or are switching means,
- the driver (1) comprises electrical supply means (16) configured to provide via the switching means the electrical supply for the lighting means (3), and
- the switching means are configured to be
- in a conducting state when the second input (14) receives electrical energy, and
- in a non-conducting state when the second input (14) does not receive electrical energy.

3. The driver (1) according to claim 2, wherein
- the switching means are galvanically isolated from the second input (14) of the driver (1).

4. The driver (1) according to claim 1, wherein
- the driver (1) comprises
- electrical supply means (16) configured to provide the electrical supply for the lighting means (3), and
- control means (18) configured to control the electrical supply means (16);
- the control means (18) comprise or are electrically connected to the activation and deactivation means (17); and
- the control means (18) are configured to control the electrical supply means (16) to not provide the electrical supply for the lighting means (3) when the electrical supply function is deactivated.

5. A driver (1) for lighting means, optionally at least one light emitting diode, LED, comprising
- an input (11a, 11b) for receiving electrical energy, and
- wireless communication means (13) for wireless communication with outside the driver (1); wherein
- the driver (1) is configured to provide, using electrical energy received by the input (11a, 11b), an electrical supply for the lighting means (3);
**characterized in that**:
- the driver (1) further comprises a bus interface (19) for being electrically connected to a wired bus, wherein
- the wireless communication means (13) are configured to be electrically supplied from the bus interface (19).

6. The driver (1) according to claim 5, wherein
- the bus interface (19) is a DALI and/or DALI-2 bus interface.

7. The driver (1) according to claim 5 or 6, wherein the wireless communication means (13) are configured to
- obtain data from the bus interface (19) and wirelessly transmit the obtained data, and/or
- wirelessly receive data and provide the wirelessly received data to the bus interface (19).

8. The driver (1) according to any one of claims 5 to 7, wherein
- the bus interface (19) is configured to galvanically isolate the driver (1) from the bus when the bus is electrically connected to the bus interface (19).

9. An emergency lighting system comprising
- an emergency driver (2) for lighting means (3), optionally at least one light emitting diode, LED, and
- a driver (1) according to any one of claims 1 to 4; wherein
- the emergency driver (2) comprises an electrical supply output (23) for providing electrical energy;
- the second input (14) of the driver (1) is configured to be electrically connected to the electrical supply output (23) of the emergency driver (2); and
- the emergency driver (2) is configured to not provide electrical energy at the electrical supply output (23) when a test mode of the emergency driver (2) is activated.

10. The emergency lighting system according to claim 9, wherein
- the emergency driver (1) comprises a second electrical supply output for providing electrical energy independent of whether the test mode is activated or not, and
- the input (11a. 11b) of the driver (1) is configured to be electrically connected to the second electrical supply output of the emergency driver (2).

11. An emergency lighting system comprising
- an emergency driver (2) for lighting means (3), optionally at least one light emitting diode, LED, and
- a driver (1) according to any one of claims 5 to 8; wherein
- the emergency driver (2) comprises an electrical supply output (23) for providing electrical energy;
- the input (11a, 11b) of the driver (1) is configured to be electrically connected to the electrical supply output (23) of the emergency driver (2); and
- the emergency driver (2) is configured to not provide electrical energy at the electrical supply output (23) when a test mode of the emergency driver (2) is activated.

12. A method for operating a driver (1) for lighting means (3), optionally at least one light emitting diode, LED, wherein
- the driver (1) comprises
- an input (11a, 11b) for receiving electrical energy,
- a second input (14) for receiving electrical energy, and
- wireless communication means (13) for wireless communication with outside the driver (1); and
- the driver (1) is configured to
- provide, using electrical energy received by the input (11a, 11b), an electrical supply for the lighting means (3) when an electrical supply function of the driver (1) is activated, and
- not provide the electrical supply for the lighting means when the electrical supply function is deactivated; wherein
- the method comprises
- activating the electrical supply function of the driver (1) when the second input (14) receives electrical energy,
- deactivating the electrical supply function of the driver (1) when the second input (14) does not receive electrical energy, and
- electrically supplying the wireless communication means (13) from the input (11a, 11b) of the driver (1).

13. A method for operating a driver (1) for lighting means (3), optionally at least one light emitting diode, LED, wherein
- the driver (1) comprises
- an input (11a, 11b) for receiving electrical energy,
- a bus interface (19) for being electrically connected to a wired bus, and
- wireless communication means (13) for wireless communication with outside the driver (1); and
- the driver (1) is configured to provide, using electrical energy received by the input (11a, 11b), an electrical supply for the lighting means (3); wherein
- the method comprises
- electrically supplying the wireless communication means (13) from the bus interface (19) of the driver.

14. A method for operating a driver (1) according to any one of claims 1 to 4, the method comprises:
- electrically connecting the second input (14) of the driver (1) to an electrical supply output (23) of an emergency driver (2) for lighting means, optionally at least one light emitting diode, LED; wherein
- the emergency driver (2) is configured to not provide electrical energy at the electrical supply output (23) when a test mode of the emergency driver (2) is activated.

15. A method for operating a driver (1) according to any one of claims 5 to 8, the method comprises:
- electrically connecting the input (11a, 11b) of the driver (1) to an electrical supply output (23) of an emergency driver (2) for lighting means, optionally at least one light emitting diode, LED; wherein
- the emergency driver (2) is configured to not provide electrical energy at the electrical supply output (23) when a test mode of the emergency driver (2) is activated.

## Patentansprüche

1. Treiber (1) für Leuchtmittel (3), optional mindestens eine Leuchtdiode, LED, der Treiber (1) umfassend
- einen Eingang (11a, 11b) zum Aufnehmen elektrischer Energie,
- Drahtloskommunikationsmittel (13) für Drahtloskommunikation mit außerhalb des Treibers (1), und
- Aktivierungs- und Deaktivierungsmittel (17) zum Aktivieren und Deaktivieren einer Funktion elektrischer Versorgung des Treibers (1); wobei
- der Treiber (1) konfiguriert ist zum
- Bereitstellen, unter Verwendung elektrischer Energie, die durch den Eingang (11a, 11b) aufgenommen wird, einer elektrischen Versorgung für die Leuchtmittel (3), wenn die Funktion elektrischer Versorgung aktiviert ist, und
- nicht Bereitstellen der elektrischen Versorgung für die Leuchtmittel, wenn die Funktion elektrischer Versorgung deaktiviert ist;
- die Drahtloskommunikationsmittel (13) konfiguriert sind, um von dem Eingang (11a, 11b) des Treibers (1) elektrisch versorgt zu werden;
**dadurch gekennzeichnet, dass:**
- der Treiber (1) ferner einen zweiten Eingang (14) zum Aufnehmen elektrischer Energie umfasst, wobei
- die Aktivierungs- und Deaktivierungsmittel (17) konfiguriert sind zum
- Aktivieren der Funktion elektrischer Versorgung des Treibers (1), wenn der zweite Eingang (14) elektrische Energie aufnimmt, und
- Deaktivieren der Funktion elektrischer Versorgung des Treibers (1), wenn der zweite Eingang (14) keine elektrische Energie aufnimmt.

2. Treiber (1) nach Anspruch 1, wobei
- die Aktivierungs- und Deaktivierungsmittel (17) Schaltmittel sind oder diese umfassen,
- der Treiber (1) elektrische Versorgungsmittel (16), die konfiguriert sind, um über die Schaltmittel die elektrische Versorgung für die Leuchtmittel (3) bereitzustellen, umfasst, und
- die Schaltmittel konfiguriert sind, um
- in einem leitenden Zustand zu sein, wenn der zweite Eingang (14) elektrische Energie aufnimmt, und
- in einem nicht leitenden Zustand zu sein, wenn der zweite Eingang (14) keine elektrische Energie aufnimmt.

3. Treiber (1) nach Anspruch 2, wobei
- die Schaltmittel von dem zweiten Eingang (14) des Treibers (1) galvanisch getrennt sind.

4. Treiber (1) nach Anspruch 1, wobei
- der Treiber (1), umfasst
- elektrische Versorgungsmittel (16), die konfiguriert sind, um die elektrische Versorgung für die Leuchtmittel (3) bereitzustellen, und
- Steuermittel (18), die konfiguriert sind, um die elektrischen Versorgungsmittel (16) zu steuern;
- die Steuermittel (18) die Aktivierungs- und Deaktivierungsmittel (17) umfassen oder mit diesen elektrisch verbunden sind; und
- die Steuermittel (18) konfiguriert sind, um die elektrischen Versorgungsmittel (16) zu steuern, die elektrische Versorgung für die Leuchtmittel (3) nicht bereitstellen, wenn die Funktion elektrischer Versorgung deaktiviert ist.

5. Treiber (1) für Leuchtmittel, optional mindestens eine Leuchtdiode, LED, umfassend
- einen Eingang (11a, 11b) zum Aufnehmen elektrischer Energie, und
- Drahtloskommunikationsmittel (13) für Drahtloskommunikation mit außerhalb des Treibers (1); wobei
- der Treiber (1) konfiguriert ist, um, unter Verwendung elektrischer Energie, die durch den Eingang (11a, 11b) aufgenommen wird, eine elektrische Versorgung für die Leuchtmittel (3) bereitzustellen;
**dadurch gekennzeichnet, dass:**
- der Treiber (1) ferner eine Bus-Schnittstelle (19) zum elektrischen Verbundensein mit einem drahtgebundenen Bus umfasst, wobei
- die Drahtloskommunikationsmittel (13) konfiguriert sind, um von der Bus-Schnittstelle (19) elektrisch versorgt zu werden.

6. Treiber (1) nach Anspruch 5, wobei
- die Bus-Schnittstelle (19) eine DALI- und/oder eine DALI-2-Bus-Schnittstelle ist.

7. Treiber (1) nach Anspruch 5 oder 6, wobei die Drahtloskommunikationsmittel (13) konfiguriert sind zum
- Erhalten von Daten von der Bus-Schnittstelle (19) und drahtlos Übertragen der erhaltenen Daten, und/oder
- drahtlos Empfangen von Daten und Bereitstellen der drahtlos empfangenen Daten an die Bus-Schnittstelle (19).

8. Treiber (1) nach einem der Ansprüche 5 bis 7, wobei
- die Bus-Schnittstelle (19) konfiguriert ist, um den Treiber (1) von dem Bus galvanisch zu trennen, wenn der Bus mit der Bus-Schnittstelle (19) elektrisch verbunden ist.

9. Notbeleuchtungssystem, umfassend
- einen Nottreiber (2) für Leuchtmittel (3), optional mindestens eine Leuchtdiode, LED, und
- einen Treiber (1) nach einem der Ansprüche 1 bis 4; wobei
- der Nottreiber (2) einen elektrischen Versorgungsausgang (23) zum Bereitstellen elektrischer Energie umfasst;
- der zweite Eingang (14) des Treibers (1) konfiguriert ist, um mit dem elektrischen Versorgungsausgang (23) des Nottreibers (2) elektrisch verbunden zu sein; und
- der Nottreiber (2) konfiguriert ist, um keine elektrische Energie an dem elektrischen Versorgungsausgang (23) bereitzustellen, wenn ein Testmodus des Nottreibers (2) aktiviert ist.

10. Notbeleuchtungssystem nach Anspruch 9, wobei
- der Nottreiber (1) einen zweiten elektrischen Versorgungsausgang zum Bereitstellen elektrischer Energie, unabhängig davon, ob der Testmodus aktiviert ist oder nicht, umfasst, und
- der Eingang (11a. 11b) des Treibers (1) konfiguriert ist, um mit dem zweiten elektrischen Versorgungsausgang des Nottreibers (2) elektrisch verbunden zu sein.

11. Notbeleuchtungssystem, umfassend
- einen Nottreiber (2) für Leuchtmittel (3), optional mindestens eine Leuchtdiode, LED, und
- einen Treiber (1) nach einem der Ansprüche 5 bis 8; wobei
- der Nottreiber (2) einen elektrischen Versorgungsausgang (23) zum Bereitstellen elektrischer Energie umfasst;
- der Eingang (11a, 11b) des Treibers (1) konfiguriert ist, um mit dem elektrischen Versorgungsausgang (23) des Nottreibers (2) elektrisch verbunden zu sein; und
- der Nottreiber (2) konfiguriert ist, um keine elektrische Energie an dem elektrischen Versorgungsausgang (23) bereitzustellen, wenn ein Testmodus des Nottreibers (2) aktiviert ist.

12. Verfahren zum Betreiben eines Treibers (1) für Leuchtmittel (3), optional mindestens eine Leuchtdiode, LED, wobei
- der Treiber (1) umfasst
- einen Eingang (11a, 11b) zum Aufnehmen elektrischer Energie,
- einen zweiten Eingang (14) zum Aufnehmen elektrischer Energie, und
- Drahtloskommunikationsmittel (13) für Drahtloskommunikation mit außerhalb des Treibers (1); und
- der Treiber (1) konfiguriert ist zum
- Bereitstellen, unter Verwendung elektrischer Energie, die durch den Eingang (11a, 11b) aufgenommen wird, einer elektrischen Versorgung für die Leuchtmittel (3), wenn eine Funktion elektrischer Versorgung des Treibers (1) aktiviert ist, und
- nicht Bereitstellen der elektrischen Versorgung für die Leuchtmittel, wenn die Funktion elektrischer Versorgung deaktiviert ist; wobei
- das Verfahren umfasst
- Aktivieren der Funktion elektrischer Versorgung des Treibers (1), wenn der zweite Eingang (14) elektrische Energie aufnimmt,
- Deaktivieren der Funktion elektrischer Versorgung des Treibers (1), wenn der zweite Eingang (14) keine elektrische Energie aufnimmt, und
- elektrisch Versorgen der Drahtloskommunikationsmittel (13) von dem Eingang (11a, 11b) des Treibers (1).

13. Verfahren zum Betreiben eines Treibers (1) für Leuchtmittel (3), optional mindestens eine Leuchtdiode, LED, wobei
- der Treiber (1) umfasst
- einen Eingang (11a, 11b) zum Aufnehmen elektrischer Energie,
- eine Bus-Schnittstelle (19) zum elektrischen Verbundensein mit einem drahtgebundenen Bus, und
- Drahtloskommunikationsmittel (13) für Drahtloskommunikation mit außerhalb des Treibers (1); und
- der Treiber (1) konfiguriert ist, um, unter Verwendung elektrischer Energie, die durch den Eingang (11a, 11b) aufgenommen wird, eine elektrische Versorgung für die Leuchtmittel (3) bereitzustellen; wobei
- das Verfahren umfasst
- elektrisch Versorgen der Drahtloskommunikationsmittel (13) von der Bus-Schnittstelle (19) des Treibers.

14. Verfahren zum Betreiben eines Treibers (1) nach einem der Ansprüche 1 bis 4, wobei das Verfahren umfasst:
- elektrisch Verbinden des zweiten Eingangs (14) des Treibers (1) mit einem elektrischen Versorgungsausgang (23) eines Nottreibers (2) für Leuchtmittel, optional mindestens eine Leuchtdiode, LED; wobei
- der Nottreiber (2) konfiguriert ist, um keine elektrische Energie an dem elektrischen Versorgungsausgang (23) bereitzustellen, wenn ein Testmodus des Nottreibers (2) aktiviert ist.

15. Verfahren zum Betreiben eines Treibers (1) nach einem der Ansprüche 5 bis 8, wobei das Verfahren umfasst:
- elektrisch Verbinden des Eingangs (11a, 11b) des Treibers (1) mit einem elektrischen Versorgungsausgang (23) eines Nottreibers (2) für Leuchtmittel, optional mindestens eine Leuchtdiode, LED; wobei
- der Nottreiber (2) konfiguriert ist, um keine elektrische Energie an dem elektrischen Versorgungsausgang (23) bereitzustellen, wenn ein Testmodus des Nottreibers (2) aktiviert ist.

## Revendications

1. Pilote (1) d'un moyen d'éclairage (3), éventuellement au moins une diode électroluminescente, DEL, le pilote (1) comprenant
- une entrée (11a, 11b) pour recevoir de l'énergie électrique,
- des moyens de communication sans fil (13) pour communiquer sans fil hors du pilote (1), et
- des moyens d'activation et de désactivation (17) pour activer et désactiver une fonction d'alimentation électrique du pilote (1) ; dans lequel
- le pilote (1) est configuré pour
- fournir, en utilisant l'énergie électrique reçue par l'entrée (11a, 11b), une alimentation électrique au moyen d'éclairage (3) lorsque la fonction d'alimentation électrique est activée, et
- ne pas assurer l'alimentation électrique du moyen d'éclairage lorsque la fonction d'alimentation électrique est désactivée ;
- les moyens de communication sans fil (13) sont configurés pour être alimentés électriquement par l'entrée (11a, 11b) du pilote (1) ;
**caractérisé en ce que** :
- le pilote (1) comprend en outre une seconde entrée (14) pour recevoir de l'énergie électrique, dans lequel
- les moyens d'activation et de désactivation (17) sont configurés pour
- activer la fonction d'alimentation électrique du pilote (1) lorsque la seconde entrée (14) reçoit de l'énergie électrique, et
- désactiver la fonction d'alimentation électrique du pilote (1) lorsque la seconde entrée (14) ne reçoit pas d'énergie électrique.

2. Pilote (1) selon la revendication 1, dans lequel
- les moyens d'activation et de désactivation (17) comprennent ou sont des moyens de commutation,
- le pilote (1) comprend des moyens d'alimentation électrique (16) configurés pour fournir, par l'intermédiaire de moyens de commutation, l'alimentation électrique au moyen d'éclairage (3), et
- les moyens de commutation sont configurés pour être
- dans un état conducteur lorsque la seconde entrée (14) reçoit de l'énergie électrique, et
- dans un état non conducteur lorsque la seconde entrée (14) ne reçoit pas d'énergie électrique.

3. Pilote (1) selon la revendication 2, dans lequel
- les moyens de commutation sont isolés galvaniquement de la seconde entrée (14) du pilote (1).

4. Pilote (1) selon la revendication 1, dans lequel
- le pilote (1) comprend
- des moyens d'alimentation électrique (16) configurés pour fournir l'alimentation électrique au moyen d'éclairage (3), et
- des moyens de commande (18) configurés pour commander les moyens d'alimentation électrique (16) ;
- les moyens de commande (18) comprennent ou sont connectés électriquement aux moyens d'activation et de désactivation (17) ; et
- les moyens de commande (18) sont configurés pour commander les moyens d'alimentation électrique (16) afin qu'ils ne fournissent pas d'alimentation électrique au moyen d'éclairage (3) lorsque la fonction d'alimentation électrique est désactivée.

5. Pilote (1) d'un moyen d'éclairage, éventuellement au moins une diode électroluminescente, DEL, comprenant
- une entrée (11a, 11b) pour recevoir de l'énergie électrique, et
- des moyens de communication sans fil (13) pour communiquer sans fil hors du pilote (1) ; dans lequel
- le pilote (1) est configuré pour fournir, en utilisant l'énergie électrique reçue par l'entrée (11a, 11b), une alimentation électrique au moyen d'éclairage (3) ;
**caractérisé en ce que** :
- le pilote (1) comprend en outre une interface de bus (19) destinée à être connectée électriquement à un bus câblé, dans lequel
- les moyens de communication sans fil (13) sont configurés pour être alimentés électriquement par l'interface de bus (19).

6. Pilote (1) selon la revendication 5, dans lequel
- l'interface de bus (19) est une interface de bus DALI et/ou DALI-2.

7. Pilote (1) selon la revendication 5 ou 6, dans lequel les moyens de communication sans fil (13) sont configurés pour
- obtenir des données de l'interface de bus (19) et transmettre sans fil les données obtenues, et/ou
- recevoir des données sans fil et fournir les données reçues sans fil à l'interface de bus (19).

8. Pilote (1) selon l'une quelconque des revendications 5 à 7, dans lequel
- l'interface de bus (19) est configurée pour isoler galvaniquement le pilote (1) du bus lorsque le bus est connecté électriquement à l'interface de bus (19).

9. Système d'éclairage de secours comprenant
- un pilote de secours (2) de moyens d'éclairage (3), éventuellement au moins une diode électroluminescente, DEL, et
- un pilote (1) selon l'une quelconque des revendications 1 à 4 ; dans lequel
- le pilote de secours (2) comprend une sortie d'alimentation électrique (23) pour fournir de l'énergie électrique ;
- la seconde entrée (14) du pilote (1) est configurée pour être connectée électriquement à la sortie d'alimentation électrique (23) du pilote de secours (2) ; et
- le pilote de secours (2) est configuré pour ne pas fournir d'énergie électrique à la sortie d'alimentation électrique (23) lorsqu'un mode de test du pilote de secours (2) est activé.

10. Système d'éclairage de secours selon la revendication 9, dans lequel
- le pilote de secours (1) comprend une seconde sortie d'alimentation électrique pour fournir de l'énergie électrique indépendamment du fait que le mode de test soit activé ou non, et
- l'entrée (11a. 11b) du pilote (1) est configurée pour être connectée électriquement à la seconde sortie d'alimentation électrique du pilote de secours (2).

11. Système d'éclairage de secours comprenant
- un pilote de secours (2) d'un moyen d'éclairage (3), éventuellement au moins une diode électroluminescente, DEL, et
- un pilote (1) selon l'une quelconque des revendications 5 à 8 ; dans lequel
- le pilote de secours (2) comprend une sortie d'alimentation électrique (23) pour fournir de l'énergie électrique ;
- l'entrée (11a, 11b) du pilote (1) est configurée pour être connectée électriquement à la sortie d'alimentation électrique (23) du pilote de secours (2) ; et
- le pilote de secours (2) est configuré pour ne pas fournir d'énergie électrique à la sortie d'alimentation électrique (23) lorsqu'un mode de test du pilote de secours (2) est activé.

12. Procédé d'actionnement d'un pilote (1) d'un moyen d'éclairage (3), éventuellement au moins une diode électroluminescente, DEL, dans lequel
- le pilote (1) comprend
- une entrée (11a, 11b) pour recevoir de l'énergie électrique,
- une seconde entrée (14) pour recevoir de l'énergie électrique, et
- des moyens de communication sans fil (13) pour communiquer sans fil hors du pilote (1) ; et
- le pilote (1) est configuré pour
- fournir, en utilisant l'énergie électrique reçue par l'entrée (11a, 11b), une alimentation électrique au moyen d'éclairage (3) lorsqu'une fonction d'alimentation électrique du pilote (1) est activée, et
- ne pas assurer l'alimentation électrique du moyen d'éclairage lorsque la fonction d'alimentation électrique est désactivée ; dans lequel
- le procédé comprend
- l'activation de la fonction d'alimentation électrique du pilote (1) lorsque la seconde entrée (14) reçoit de l'énergie électrique,
- la désactivation de la fonction d'alimentation électrique du pilote (1) lorsque la seconde entrée (14) ne reçoit pas d'énergie électrique, et
- l'alimentation électrique des moyens de communication sans fil (13) à partir de l'entrée (11a, 11b) du pilote (1).

13. Procédé d'actionnement d'un pilote (1) d'un moyen d'éclairage (3), éventuellement au moins une diode électroluminescente, DEL, dans lequel
- le pilote (1) comprend
- une entrée (11a, 11b) pour recevoir de l'énergie électrique,
- une interface de bus (19) destinée à être connectée électriquement à un bus câblé, et
- des moyens de communication sans fil (13) pour communiquer sans fil hors du pilote (1) ; et
- le pilote (1) est configuré pour fournir, en utilisant l'énergie électrique reçue par l'entrée (11a, 11b), une alimentation électrique au moyen d'éclairage (3) ; dans lequel
- le procédé comprend
- l'alimentation électrique des moyens de communication sans fil (13) à partir de l'interface de bus (19) du pilote.

14. Procédé d'activation d'un pilote (1) selon l'une quelconque des revendications 1 à 4, dans lequel le procédé comprend :
- la connexion électrique de la seconde entrée (14) du pilote (1) à une sortie d'alimentation électrique (23) d'un pilote de secours (2) pour un moyen d'éclairage, éventuellement au moins une diode électroluminescente, DEL ; dans lequel
- le pilote de secours (2) est configuré pour ne pas fournir d'énergie électrique à la sortie d'alimentation électrique (23) lorsqu'un mode de test du pilote de secours (2) est activé.

15. Procédé d'activation d'un pilote (1) selon l'une quelconque des revendications 5 à 8, dans lequel le procédé comprend :
- la connexion électrique de l'entrée (11a, 11b) du pilote (1) à une sortie d'alimentation électrique (23) d'un pilote de secours (2) pour un moyen d'éclairage, éventuellement au moins une diode électroluminescente, DEL ; dans lequel
- le pilote de secours (2) est configuré pour ne pas fournir d'énergie électrique à la sortie d'alimentation électrique (23) lorsqu'un mode de test du pilote de secours (2) est activé.
